# EUROPÄISCHE PATENTSCHRIFT

(11) **EP 2 111 425 B1**
(45) Veröffentlichungstag und Bekanntmachung des Hinweises auf die Patenterteilung: **23.03.2011**
(21) Anmeldenummer: 08715657.6
(22) Anmeldetag: 23.01.2008
(51) Int. Cl.: C08J 7/04, C08J 7/12

(54) **KANTENLEISTE FÜR MÖBELSTÜCKE IN FORM EINES DEKORIERTEN KUNSTSTOFFPROFILS UND VERFAHREN ZU DEREN HERSTELLUNG**
EDGE STRIP FOR FURNITURE IN THE FORM OF A DECORATED PROFILED PLASTIC PIECE AND METHOD FOR THE PRODUCTION THEREOF
LISTEAU POUR MEUBLES EN FORME D'UN PROFILÉ PLASTIQUE DÉCORÉ ET PROCÉDÉ DE RÉALISATION ASSOCIÉ

(30) Priorität: 27.01.2007 DE 102007004229
(43) Veröffentlichungstag der Anmeldung: 28.10.2009
(73) Patentinhaber: Rehau AG + Co, 95111 Rehau (DE)
(72) Erfinder: KÜHNBERGER, Sven, 95152 Selbitz (DE); HAGEN, Oliver, 95032 Hof (DE)
(86) Internationale Anmeldenummer: PCT/EP2008/000492
(87) Internationale Veröffentlichungsnummer: WO 2008/089967

(56) Entgegenhaltungen:
- EP-A- 0 782 932
- EP-A- 1 223 188
- WO-A-02/38382
- DE-A1- 3 141 631
- DE-C2- 19 943 330
- DE-U1- 20 202 692
- FR-A- 2 789 686
- US-A1- 2003 039 839
- US-B1- 6 177 496

## Beschreibung

Die Erfindung betrifft eine Kantenleiste für Möbelstücke in Form eines dekorierten Kunststoffprofils, umfassend ein extrudiertes profiliertes Substrat als Grundkörper des Kunststoffprofils.

Bei der Dekorierung derartiger Kunststoffprofile mittels Druck- und Lackierverfahren werden häufig produktionsfrische, bzw. nur kurzzeitig (wenige Stunden bis Tage) abgelagerte Substrate eingesetzt. Bei einer längeren Ablagerung über Wochen und Monate kommt es in Abhängigkeit vom Substrat und dem Dekorierungsverfahren zu Problemen bei einer nachträglichen Beschichtung aufgrund von Umwelteinflüssen und Alterungserscheinungen. Maßgeblich sind dabei beispielsweise Schrumpfeffekte, nachträgliche Kristallisationen, Oxidationserscheinungen, Feuchtigkeitsaufnahme, statische Aufladung oder Verschmutzung der Oberflächen durch Staub, Öl und andere Medien.

Weiterhin können beim Herstellungsprozess der Kunststoffprofile prozessbedingte Schwankungen der für eine Dekorierung entscheidenden Oberflächeneigenschaften auftreten. Dies kann dazu führen, dass die Reproduzierbarkeit der Beschichtungsergebnisse hinsichtlich des Verlaufs, der Haftung des Farbtons, des Glanzgrades sowie der Oberflächenstruktur negativ beeinflusst wird und eine seriensichere Beschichtung dieser Substrate aus den genannten Gründen nicht gegeben ist. Bei dem gattungsgemäßen Kunststoffprofil können Oberflächeneigenschaften wie Oberflächenstruktur, Oberflächenglätte/-rauhigkeit, Porosität, Penetrationsvermögen, Glanz, Farbton, Oberflächenspannung, elektrische Leitfähigkeit usw. durch Schwankungen bei den verwendeten Rohstoffen und deren Aufbereitung sowie durch Schwankung der Verarbeitungsparameter während längerer Produktionszeiten bzw. zwischen verschiedenen Fertigungen variieren.

Die genannten Einflüsse erschweren die seriensichere Reproduzierbarkeit einer Dekorbeschichtung mit zunehmendem zeitlichen Abstand von der Fertigung des Substrats.

Die FR 2 789 686 offenbart eine Bedruckung zur Kennzeichnung eines Rohres. Um die Anhaftung der die Bedruckung aufnehmenden Schicht zu beeinflussen, enthält diese ein Kompatibilisierungsmittel. Aus der EP 1 223 188 A1 ist eine Pulverlackierung für Isolierstege für Alu-Kunststoff-Verbundprofile bekannt. Die US 6 177 496 B1 offenbart ein Kunststoffprofil mit einer Zwischenschicht, welche nachträglich mit einer Farbbeschichtung beaufschlagt wird. Diese Zwischenschicht enthält Pigmente.

Die WO 02 38382 A1 zeigt eine mehrschichtige Folie, auf welcher eine Metallisierung aufgebracht wird. Die DE 31 41 631 A1 offenbart eine beschichtete Folie, wobei die Folienbeschichtung als Farbauftrag ausgebildet ist. Die US 2003 008 39839 A1 sowie die EP 0 782 932 A1 betreffen ebenfalls beschichtete Kunststofffolien. Aus der DE 199 43 330 C2 ist eine mit organischen Tinten per Inkjet bedruckbare Folie bekannt. Die DE 202 02 692 U1 zeigt eine Schutzvorrichtung für ein Kinderbett.

Der Erfindung liegt die Aufgabe zugrunde, eine Kantenleiste für Möbelstücke bereitzustellen, welche auch bei längerem zeitlichen Abstand zwischen der Substratfertigung und Dekorbeschichtung eine seriensichere Reproduzierbarkeit der Dekorbeschichtung ermöglicht.

Diese Aufgabe wird durch eine Kantenleiste für Möbelstücke gemäß Anspruch 1 gelöst. Die Funktionsschicht unterliegt selbst nicht den genannten nachteiligen Einflüssen auf die Dekorierbarkeit von Kunststoffoberflächen, so dass die Dekorbeschichtung trotz eines zeitlichen Abstands zur Substratfertigung seriensicher reproduzierbar ist. In Folge dessen kann das vorbeschichtete Kunststoffprofil bis zum nachfolgenden Dekorierungsprozess eingelagert oder an Weiterverarbeiter versandt werden. Der Anteil der Füllstoffe und/oder Additive beeinflusst die Benetzbarkeit bzw. Saugfähigkeit der Funktionsschicht, so dass je nach Ausführung des gewählten Dekors eine optimale Beschichtung sichergestellt wird. Kantenleisten sind hinsichtlich des Dekors in der Regel auf passende Möbelkorpusteile abgestimmt, so dass der Effekt der seriensicheren, nachträglichen Dekorbeschichtung von Kunststoffprofilen hier von besonderer Bedeutung ist.

In einer bevorzugten Ausführung der Erfindung ist die Dekorbeschichtung an der Funktionsschicht anhaftbar und/oder zumindest teilweise in der Funktionsschicht aufnehmbar. Die Funktionsschicht bildet dabei einen Haftgrund für die Dekorbeschichtung und/oder eine Art "Schwamm" zur Aufnahme von Farbpigmenten oder sonstigen Dekorpartikeln der Dekorbeschichtung. So gewährleistet die Funktionsschicht einen optimalen Farbauftrag bzw. eine optimale Farbeinlagerung, ohne dass für die nachträgliche Dekorbeschichtung aufwändige Vorbehandlungsmaßnahmen erforderlich sind.

In einer weiteren bevorzugten Ausführung der Erfindung umfasst die Funktionsschicht:
- ca. 10 bis 30 Gewichtsprozent Bindemittel, vorzugsweise PVC-Copolymer;
- ca. 10 bis 40 Gewichtsprozent Farbmittel, vorzugsweise Pigmente oder sonstige Farbstoffe; und
- ca. 40 bis 80 Gewichtsprozent Lösemittel, vorzugsweise organische Lösemittel, bevorzugt auf Ester- bzw. Ketonbasis.

Durch das verwendete Bindemittel wird die Haftung des Schichtaufbaus beeinflusst. Über Füllstoffe und Additive werden die Benetzung und das Saugvermögen der Funktionsschicht eingestellt. Eine Einfärbung der Funktionsschicht erfolgt über die Farbmittel, vorzugsweise Pigmente und Farbstoffe und dient der reproduzierbaren Bereitstellung eines konstanten Grundfarbtons für die nachträgliche Dekorierung. Das genannte Zusammensetzungsverhältnis erweist sich als besonders günstig.

In einer weiteren bevorzugten Ausführung der Erfindung umfasst die Funktionsschicht ferner:
- ca. 1 bis 15 Gewichtsprozent Haftharz, vorzugsweise auf Polyesterbasis; und
- ca. 0,5 bis 2 Gewichtsprozent Wachs, vorzugsweise mikronisiertes PE-Wachs; und
- ca. 0,5 bis 3 Gewichtsprozent Kieselsäure, vorzugsweise nachbehandelte, pyrogene Kieselsäure; und
- ca. 0,1 bis 1 Gewichtsprozent Entschäumer.

Dieses Zusammensetzungsverhältnis erweist sich bei der nachträglichen Dekorbeschichtung im Inkjetverfahren als besonders vorteilhaft.

Das Bindemittel kann auch vorteilhaft ausgewählt sein aus Polyacrylaten, Polymethacrylaten, Polyvinylbutyral, Polyurethanen, Polyestern, Polyvinylacetat, sowie Gemischen bzw. Copolymeren der genannten Bindemittelklassen.

In einer weiteren bevorzugten Ausführung der Erfindung weist das Kunststoffprofil zwischen dem Substrat und der Funktionsschicht eine Primerung auf. Bei dieser Primerung werden auf das Kunststoffsubstrat geeignete Haftvermittler, vorzugsweise lösemittelbasiert, wasserbasiert bzw. UV-härtend, bevorzugt im Walzverfahren oder durch Sprühapplikation aufgebracht. Die Primerung verbessert die Haftung der Funktionsschicht auf dem Substrat und wird in Abhängigkeit von dem Kunststoff des Substrats ausgewählt.

In einer weiteren bevorzugten Ausführung der Erfindung ist die Primerung eine wasserbasierte oder strahlenhärtbare Primerung.

In einer weiteren bevorzugten Ausführung der Erfindung umfasst die Primerung:
- ca. 25 bis 28 Gewichtsprozent Bindemittel, vorzugsweise Haftharz, bevorzugt auf der Basis eines Polyesterpolyols;
- ca. 1,5 bis 2,5 Gewichtsprozent Füllstoffe, vorzugsweise anorganischen Füllstoffe, bevorzugt pyrogene Kieselsäure; und
- ca. 60 bis 70 Gewichtsprozent Lösemittel, vorzugsweise organisches Lösemittel, bevorzugt auf Ester- bzw. Ketonbasis (z.B. Ethylacetat, Cyclohexanon, etc.).

In einer weiteren bevorzugten Ausführung der Erfindung umfasst die Primerung ferner:
- 3 bis 5 Gewichtsprozent eines Polyisocyanats.

In einer weiteren bevorzugten Ausführung der Erfindung ist das Substrat physikalisch behandelt, vorzugsweise an einer von der Funktionsschicht bedeckten Oberfläche. Dies verbessert die Haftung angrenzender Schichten an dem Substrat.

In einer weiteren bevorzugten Ausführung der Erfindung ist die Funktionsschicht physikalisch behandelt. Dies verbessert die Anhaftung der Dekorbeschichtung an der Funktionsschicht bzw. deren Aufnahme in der Funktionsschicht.

In einer weiteren bevorzugten Ausführung der Erfindung weist die Funktionsschicht eine Oberflächenenergie von 40 bis 55 mN/m, vorzugsweise 47 bis 52 mN/m auf. Dies begünstigt die Qualität der Benetzung und Anhaftung der Dekorbeschichtung auf der Funktionsschicht und dem Erreichen eines guten Tintenverlaufs mit hoher Flächendeckung und Farbsättigung. Die Aktivierung der Funktionsschicht mittels physikalischer Vorbehandlung erfolgt vorzugsweise kurz vor der nachträglichen Dekorierung.

Ein weiterer Aspekt der Erfindung betrifft ein Verfahren zum Herstellen einer Kantenleiste für Möbelstücke in Form eines Kunststoffprofils, umfassend die Schritte:
a) Extrudieren eines profilierten Substrats als Grundkörper des Kunststoffprofils,
b) Physikalisches Behandeln des Substrats zur Erhöhung der Oberflächenenergie des Substrats;
c) Beaufschlagen des Substrats mit einer Primerung; und
d) Aufbringen einer Funktionsschicht auf das mit der Primerung beaufschlagte Substrat, wobei die Funktionsschicht nachträglich im Wege einer Inkjet-Bedruckung mit einer Dekorbeschichtung beaufschlagt wird, wobei eine Farbaufnahmefähigkeit und/oder eine Farbanhaftbarkeit der Funktionsschicht durch einen in der Funktionsschicht enthaltenen Anteil an Füllstoffen und/oder Additiven eingestellt wird und wobei die Funktionsschicht (5) als Füllstoffe und/oder Additive ca. 0,5 bis 3 Gewichtsprozent Kieselsäure und ca. 0,5 bis 2 Gewichtsprozent Wachs enthält.

In einer weiteren bevorzugten Ausführung des erfindungsgemäßen Verfahrens umfasst Schritt b) eine Koronabehandlung, vorzugsweise mit Niederfrequenz-/Hochfrequenzkorona, Beflammung, Plasmabehandlung, Fluorierung, Silikatisierung, vorzugsweise Flammpyrolyse von Silanen oder eine Kombination daraus. Mit den genannten Maßnahmen lässt sich die Oberflächenenergie des Substrats leicht auf über 40 mN/m erhöhen.

In einer weiteren bevorzugten Ausführung des erfindungsgemäßen Verfahrens umfasst Schritt c): Das Auftragen der Primerung durch Sprühen, Walzauftrag, Gießen, Fluten, vorzugsweise mit einem Auftragsgewicht von 5 bis 20 g/m² Nassfilmdicke. Diese Maßnahme begünstigt die Anhaftung angrenzender Schichten an der Substratoberfläche.

In einer weiteren bevorzugten Ausführung des erfindungsgemäßen Verfahrens umfasst Schritt d): Das Auftragen der Funktionsschicht durch Sprühen, Walzauftrag, Gießen oder Fluten, vorzugsweise mit einem Auftragsgewicht der Funktionsschicht in Abhängigkeit der Anforderungen zwischen 1 bis 100 g/m² Nassfilmdicke, bevorzugt durch Mehrfachbeschichtung mit geringerem Auftragsgewicht. Diese Maßnahmen verbessern die Anhaftung der Funktionsschicht an bzw. auf der Primerung bzw. dem Substrat.

In einer weiteren bevorzugten Ausführung des erfindungsgemäßen Verfahrens umfasst das Verfahren ferner:
e) Physikalisches Behandeln der Funktionsschicht zur Erhöhung der Oberflächenenergie der Funktionsschicht.

In einer weiteren bevorzugten Ausführung des erfindungsgemäßen Verfahrens umfasst Schritt e) eine Koronabehandlung, vorzugsweise mit Niederfrequenz-/Hochfrequenzkorona, Beflammung, Plasmabehandlung, Fluorierung, Silikatisierung, vorzugsweise Flammpyrolyse von Silanen, oder eine Kombination daraus. Mit den genannten Verfahren lässt sich die Oberflächenenergie des Substrats auf über 47 mN/m erhöhen.

Die bevorzugten Ausführungsbeispiele und Merkmale der genannten Erfindung werden nachstehend mit Bezug auf die beiliegenden Zeichnungen beschrieben.

### Kurze Beschreibung der Zeichnungen:

- Figur 1: zeigt schematisch ein Verfahren bzw. eine Vorrichtung zur Herstellung eines erfindungsgemäßen, dekorierten Kunststoffprofils.
- Figur 2: zeigt einen Schnitt II-II eines profilierten Substrats aus Figur 1.
- Figur 3: zeigt einen Schnitt III-III eines physikalisch vorbehandelten, profilierten Sub- strats aus Figur 1.
- Figur 4: zeigt einen Schnitt IV-IV eines mit einer Primerung versehenen, physikalisch vorbehandelten Substrats aus Figur 1.
- Figur 5: zeigt einen Schnitt V-V eines mit der Funktionsschicht und der Primerung versehenen, physikalisch vorbehandelten Substrats aus Figur 1.
- Figur 6: zeigt schematisch ein Verfahren bzw. eine Vorrichtung zur nachträglichen Dekorbeschichtung des erfindungsgemäßen, dekorierten Kunststoffprofils.
- Figur 7: zeigt einen Schnitt VII-VII des erfindungsgemäßen Kunststoffprofils aus Figur 6.
- Figur 8: zeigt einen Schnitt VIII-VIII des erfindungsgemäßen Kunststoffprofils mit physikalisch behandelter Funktionsschicht aus Figur 6.
- Figur 9: zeigt einen Schnitt VIIII-VIIII des nachträglich mit einer Dekorbeschichtung beaufschlagten Kunststoffprofils mit physikalisch behandelter Funktions- schicht aus Figur 6.

### Detaillierte Beschreibung der bevorzugten Ausführungsbeispiele der Erfindung:

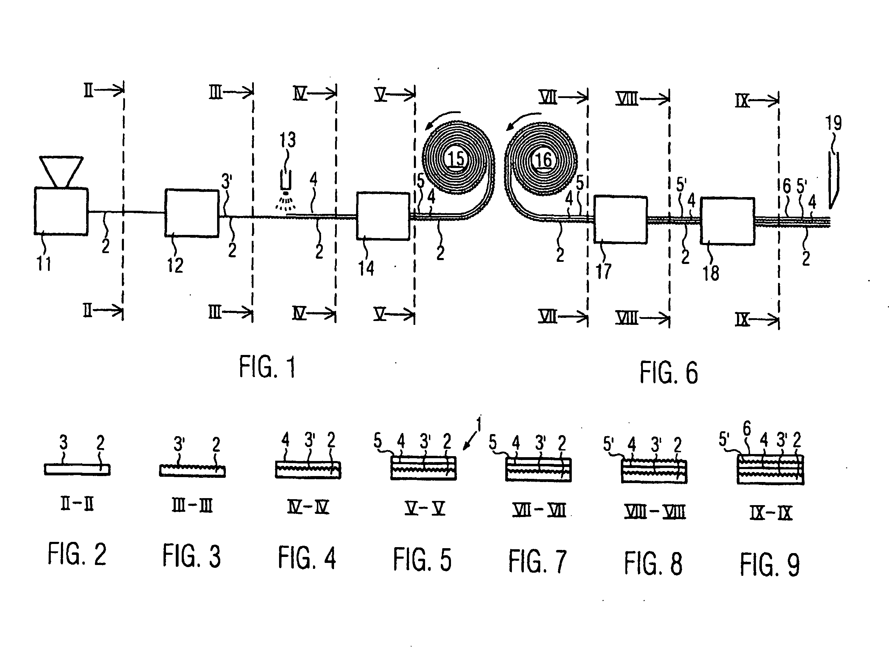

Die nachstehend mit Bezug auf Fig. 1 bis 9 beschriebene Erfindung betrifft ein dekoriertes, als Kantenleiste ausgebildetes Kunststoffprofil 1, umfassend ein profiliertes Substrat 2 als Grundkörper des Kunststoffprofils 1 und eine das Substrat 2 zumindest abschnittsweise bedeckende Funktionsschicht 5, die nachträglich mit einer Dekorbeschichtung 6 beaufschlagt ist.

Der Aufbau eines erfindungsgemäßen Kunststoffprofils 1 ist anschaulich der Schnittdarstellung V-V der Figur 5 zu entnehmen. Die physikalische Vorbehandlung des Substrats 2 sowie das Auftragen einer Primerung 4 sind nicht zwingend erforderlich. Diese Maßnahmen können gewählt werden, um bei bestimmten Kunststoffen des Substrats 2 eine bessere Verbindung des Substrats 2 mit der Funktionsschicht 5 zu erreichen.

Die Dekorbeschichtung 6 (z.B. Farbpigmente, Dekorpartikel, etc.) ist an der Funktionsschicht 5 anhaftbar und/oder zumindest abschnittsweise in der Funktionsschicht 5 aufnehmbar. Zur besseren Anhaftung der Dekorbeschichtung 6 an der Funktionsschicht 5, weist die Funktionsschicht 5 vorzugsweise eine physikalisch vorbehandelte Oberfläche 5' auf. Die Einlagerung von Füllstoffen und/oder Additiven in der Funktionsschicht 5 beeinflusst die Benetzbarkeit bzw. Saugfähigkeit der Funktionsschicht 5.

Der Farbdruck wird berührungslos über eine Inkjetbedruckung aufgetragen.

Die Funktionsschicht 5 weist vorzugsweise die folgende Zusammensetzung auf:
- ca. 10 bis 20 Gewichtsprozent Bindemittel, vorzugsweise PVC-Copolymer,
- ca. 1 bis 15 Gewichtsprozent Haftharz, vorzugsweise auf Polyesterbasis;
- ca. 10 bis 40 Gewichtsprozent Farbmittel, vorzugsweise Pigmente oder andere Farbstoffe;
- ca. 0,5 bis 2 Gewichtsprozent Wachs, vorzugsweise mikronisiertes PE-Wachs;
- ca. 0,5 bis 3 Gewichtsprozent Kieselsäure, vorzugsweise nachbehandelte pyrogene Kieselsäure;
- ca. 0,1 bis 1 Gewichtsprozent Entschäumer; und
- ca. 40 bis 80 Gewichtsprozent Lösemittel, vorzugsweise organische Lösemittel, bevorzugt auf Ester- bzw. Ketonbasis.

Um die Anhaftung der Funktionsschicht 5 an dem Substrat 2 zu verbessern, kann das Kunststoffprofil 1 zwischen dem Substrat 2 und der Funktionsschicht 5 eine Primerung 4 aufweisen. Die Primerung 4 weist vorzugsweise die folgende Zusammensetzung auf:
- ca. 25 bis 28 Gewichtsprozent Bindemittel, vorzugsweise Haftharz, bevorzugt auf Basis eines Polyesterpolyols;
- ca. 1,5 bis 2,5 Gewichtsprozent Füllstoff, vorzugsweise anorganischen Füllstoff, bevorzugt pyrogene Kieselsäure;
- ca. 3 bis 5 Gewichtsprozent Polyisocyanat; und
- ca. 60 bis 70 Gewichtsprozent Lösemittel, vorzugsweise organisches Lösemittel, bevorzugt auf Ester- bzw. Ketonbasis.

Alternativ ist auch die Verwendung eines wasserbasierten Primers (vernetzbare PU-Dispersion) oder eines strahlenhärtenden Primers (z. B. radikalisch und/oder kationisch härtender UV-Primer) denkbar.

Um die Haftung des Primers 4 am Substrat 2 zu verbessern, kann das profilierte Substrat 2 physikalisch behandelt sein, vorzugsweise an einer von der Funktionsschicht 5 bedeckten Oberfläche 3. Durch die physikalische Behandlung wird die Oberflächenenergie des Substrats auf über 40 mN/m erhöht.

Um die Haftung der Dekorbeschichtung 6 der Funktionsschicht 5 zu verbessern, kann die Funktionsschicht 5 physikalisch behandelt sein. Die physikalisch behandelte Funktionsschicht weist vorzugsweise eine Oberflächenenergie von 40 bis 55 mN/m, bevorzugt von 47 bis 52 mN/m auf.

Das erfindungsgemäße Verfahren zur Herstellung des erfindungsgemäßen, dekorierbaren Kunststoffprofils 1 wird nachstehend mit Bezug auf die Figuren 1 bis 5 beschrieben.

Das erfindungsgemäße Verfahren zum Herstellen des dekorierbaren Kunststoffprofils 1 umfasst die Schritte:
a) Bereitstellen eines profilierten Substrats 2 als Grundkörper des Kunststoffprofils 1;
b) Physikalisches Behandeln des Substrats 1 zur Erhöhung der Oberflächenenergie des Substrats 2;
c) Beaufschlagen des Substrats 2 mit einer Primerung 4;
d) Aufbringen einer Funktionsschicht 5 auf das mit der Primerung 4 beaufschlagte Substrat 1, wobei die Funktionsschicht 5 nachträglich mit einer Dekorbeschichtung 6 beaufschlagbar ist.

Figur 1 zeigt schematisch eine Vorrichtung bzw. ein Verfahren zur Herstellung des erfindungsgemäßen, dekorierten Kunststoffprofils 1.

Schritt a) umfasst das Bereitstellen eines profilierten Substrats 2 mittels einer Bereitstellungseinrichtung 11. Als Bereitstellungseinrichtung 11 ist ein Extruder vorgesehen, wobei das profilierte Substrat 2 extrudiert wird. Der Querschnitt des Substrates 2 nach Ausführung des Schrittes a) ist im Schnitt II-II der Figur 2 schematisch dargestellt. Auch andere Querschnittsprofile des Substrates 2 neben dem rechteckigen Querschnittsprofil sind ausführbar.

Schritt b) umfasst eine physikalische Vorbehandlung des Substrats 2, die insbesondere für niederenergetische Oberflächen wie Polyolefine erforderlich ist. Die Funktionsschicht 5 kann jedoch auch ohne physikalische Vorbehandlung des Substrats 2 auf das Substrat 2 unmittelbar aufgebracht werden. Die aus Haftungsgründen für bestimmte niederenergetische Oberflächen empfehlenswerte Oberflächenvorbehandlung kann über eine Koronabehandlung, vorzugsweise mit Niederfrequenz-/Hochfrequenzkorona, Beflammung, Plasmabehandlung, Fluorierung, Silikatisierung, vorzugsweise Flammpyrolyse von Silanen, oder als Kombination daraus erfolgen. Das Ziel des Schrittes b) ist die Erhöhung der Oberflächenenergie auf über 40 mN/m. Schritt b) wird in einer Einrichtung 12 zur physikalischen Vorbehandlung des Substrats 2 vorgenommen.

Dabei wird eine mit der Funktionsschicht 5 zu bedeckende Oberfläche 3 des Substrats im Rahmen der genannten Maßnahmen bearbeitet. Der Querschnitt des Substrates 2 mit physikalisch vorbehandelter Substratoberfläche 3', nach Ausführung des Schrittes b), ist im Schnitt III-III der Figur 3 dargestellt.

Schritt c) umfasst die Primerung der physikalisch vorbehandelten Substratoberfläche 3'. Wie Schritt b) ist Schritt c) zur Herstellung des erfindungsgemäßen, dekorierten KunststoffProfils 1 nicht zwingend erforderlich. Die Primerung der Substratoberfläche 3' ist lediglich für niederenergetische Oberflächen wie Polyolefine erforderlich. Bei derartigen kritischen Substraten kann zusätzlich zur physikalischen Vorbehandlung gemäß Schritt b) noch die Ausrüstung mit einem Bedruckungsprimer, beispielsweise einem Haftvermittler oder einem Vorstrich, erfolgen. Der Auftrag der Primerung bzw. des Primers 4 erfolgt in einer geeigneten (in Fig. 1 symbolisch dargestellten) Einrichtung 13 durch Sprühen, Walzauftrag, Gießen, Fluten, etc. mit einem Auftragsgewicht des Primers 4 je nach Verwendung zwischen 1 bims 50 g/m² Nassfilmdicke. Der Primer 4 weist vorzugsweise die vorangehend genannte Zusammensetzung auf. Der Querschnitt des Substrates 2 mit dem auf der physikalisch vorbehandelten Oberfläche 3' aufgetragenen Primer 4 ist im Schnitt IV-IV der Figur 4 dargestellt.

Schritt d) umfasst das Aufbringen der Funktionsschicht 5 auf das Substrat 2 bzw. auf die Primerung 4. Die Funktionsschicht 5 bildet den Haftgrund für die spätere Dekorbeschichtung 6 und weist vorzugsweise die zuvor genannte Zusammensetzung auf. Durch das verwendete. Bindemittel wird die Haftung des Schichtaufbaus beeinflusst. Über Füllstoffe und Additive werden die Benetzung und das Saugvermögen der Funktionsschicht 5 eingestellt. Eine Einfärbung der Funktionsschicht 5 erfolgt über übliche Farbmittel, beispielsweise Pigmente und sonstige Farbstoffe, und dient der reproduzierbaren Bereitstellung eines konstanten Grundfarbtons für die nachträgliche Dekorierung. Der Auftrag der Funktionsschicht 5 kann durch Sprühen, Walzauftrag, Gießen, Fluten etc. erfolgen. Das Auftragsgewicht der Funktionsschicht 5 beträgt in Abhängigkeit von den Anforderungen zwischen 1 bis 100 g/m² Nassfilmdicke. Das Gesamtauftragsgewicht kann auch durch Mehrfachbeschichtungen mit jeweils geringeren Auftragsgewichten erfolgen. Schritt d) wird in einer geeigneten Einrichtung 14 zum Aufbringen der Funktionsschicht 5 durchgeführt. Der Zustand des Substrats 2 mit physikalisch vorbehandelter Oberfläche 3', aufgetragenem Primer 4 und aufgebrachter Funktionsschicht 5 nach erfolgtem Schritt d) ist anschaulich im Schnitt V-V der Figur 5 dargestellt.

Nach dem Aufbringen der Funktionsschicht 5 auf das Substrat 2 bzw. die Primerung 4 ist das dekorierbare Kunststoffprofil 1 fertig und wird zur Lagerung oder zum Transport vorbereitet. Vorzugsweise wird das dekorierbare Kunststoffprofil 1 auf einer Vorratseinrichtung bevorratet, z.B. einer Vorratsspule 15 aufgerollt.

Ein Verfahren zur nachträglichen Dekorbeschichtung des erfindungsgemäßen, dekorierbaren Kunststoffprofils 1 wird nachstehend mit Bezug auf die Figuren 6 bis 9 beschrieben. Figur 6 zeigt schematisch eine Vorrichtung bzw. ein Verfahren zur nachträglichen Dekorbeschichtung des erfindungsgemäßen, dekorierbaren Kunststoffprofils 1.

Zur Dekorbeschichtung wird das erfindungsgemäße, dekorierbare Kunststoffprofil 1 durch eine Bereitstellungseinrichtung 16 bereitgestellt. Beispielsweise wird das Kunststoffprofil 1 dabei von einer Vorratsspule 16 abgewickelt und den nachfolgenden Verfahrensschritten bzw. Vorrichtungen zugeführt. Der Querschnitt des Kunststoffprofils 1, umfassend das Substrat 2 mit physikalisch behandelter Oberfläche 3', dem Primer 4 und der Funktionsschicht 5, nach Ausführung des Schrittes d) und vor Ausführung des Schrittes e), ist anschaulich im Schnitt VII-VII der Figur 7 dargestellt. Wie erwähnt sind die Schritte b) und c) zur Herstellung des erfindungsgemäßen Kunststoffprofils 1 nicht zwingend erforderlich. Demnach umfasst das erfindungsgemäße Kunststoffprofil 1 nicht zwingend eine physikalisch behandelte Oberfläche 3' oder eine Primerung 4, wie in Fig. 5 dargestellt ist. In einem solchen Fall ist dann die Funktionsschicht 5 unmittelbar mit dem Substrat 2 verbunden.

Schritt e) umfasst das physikalische Behandeln der Funktionsschicht 5 vor der nachträglichen Dekorierung des Kunststoffprofils 1 in einer dafür geeigneten Einrichtung 17. Für eine optimale Haftung der Dekorbeschichtung 6 auf der Funktionsschicht 5 sowie zum Erreichen eines guten Tintenverlaufs mit hoher Flächendeckung und Farbsättigung, erfolgt kurz vor der nachträglichen Dekorierung des Kunststoffprofils 1 eine Aktivierung der Funktionsschicht 5 mittels physikalischer Vorbehandlung in einer geeigneten Einrichtung 17. Die Aktivierung der Funktionsschicht 5 erfolgt vorzugsweise durch Koronabehandlung, vorzugsweise mit Niederfrequenz-/Hochfrequenzkorona, Beflammung, Plasmabehandlung, Fluorierung, Silikatisierung, vorzugsweise Flammpyrolyse von Silanen, oder als Kombination daraus. Im Schritt e) wird eine Erhöhung der Oberflächenenergie der Funktionsschicht 5 von durchschnittlich 41 bis 43 mN/m vor der Aktivierung auf 47 bis 52 mN/m nach der Aktivierung bzw. Behandlung erzielt. Die Oberflächenenergie der Funktionsschicht 5 wird über Kontaktwinkelmessungen bestimmt. Der Querschnitt des Kunststoffprofils 1 nach Ausführung des Schrittes e) ist anschaulich im Schnitt VIII-VIII der Figur 8 dargestellt.

Nach Ausführung des Schrittes e) weist die Funktionsschicht 5 eine aufgeraute bzw. aktivierte Oberfläche 5' auf.

Schritt f) umfasst das Beaufschlagen der Funktionsschicht 5 mit der Dekorbeschichtung 6 in einer geeigneten Einrichtung 18 zum Auftragen der Dekorbeschichtung 6 auf die Funktionsschicht 5. Der Auftrag der Dekorbeschichtung 6 erfolgt berührungslos im Inkjetverfahren. Der Zustand des dekorbeschichteten Kunststoffprofils 1 nach Ausführung des Schrittes f) ist anschaulich im Schnitt VIIII-VIIII der Figur 9 dargestellt.

## Patentansprüche

1. Kantenleiste für Möbelstücke in Form eines dekorierten Kunststoffprofils (1), umfassend:
- ein extrudiertes profiliertes Substrat (2) als Grundkörper des Kunststoffprofils (1) und
- eine das Substrat (2) zumindest abschnittsweise bedeckende Funktionsschicht (5),
wobei die Funktionsschicht (5) nachträglich mit einer als Inkjet-Bedruckung ausgebildeten Dekorbeschichtung (6) beaufschlagt ist, wobei eine Farbaufnahmefähigkeit und/oder eine Farbanhaftbarkeit der Funktionsschicht (5) durch einen in der Funktionsschicht (5) enthaltenen Anteil an Füllstoffen und/oder Additiven eingestellt ist und wobei die Funktionsschicht (5) als Füllstoffe und/oder Additive, 0,5 bis 3 Gewichtsprozent Kieselsäure und 0,5 bis 2 Gewichtsprozent Wachs enthält.

2. Kantenteiste nach Anspruch 1, wobei die Dekorbeschichtung (6) an der Funktionsschicht (5) anhaftbar ist und/oder in der Funktionsschicht (5) aufnehmbar ist.

3. Kantenleiste nach einem der vorangegangenen Ansprüche, wobei das Kunststoffprofil (1) zwischen dem Substrat (2) und der Funktionsschicht (5) eine Primerung (4) aufweist.

4. Kantenleiste nach Anspruch 3, wobei die Primerung eine wasserbasierte oder strahlenhärtende Primerung ist.

5. Kantenleiste nach einem der vorangegangenen Ansprüche, wobei die Funktionsschicht eine Oberflächenenergie von 40 bis 55 mN/m, vorzugsweise 47 bis 52 mN/m aufweist.

6. Verfahren zum Herstellen einer Kantenleiste für Möbelstücke in Form eines Kunststoffprofils (1), umfassend die Schritte:
a) Extrudieren eines profilierten Substrats (2) als Grundkörper des Kunststoffprofils (1), **gekennzeichnet durch**
b) Physikalisches Behandeln des Substrats (2) zur Erhöhung der Oberflächenenergie des Substrats (1);
c) Beaufschlagen des Substrats (2) mit einer Primerung (4); und
d) Aufbringe einer Funktionsschicht (5) auf das mit der Primerung (4) beaufschlagte Substrat (2), wobei die Funktionsschicht (5) nachträglich im Wege einer Inkjet-Bedruckung mit einer Dekorbeschichtung (6) beaufschlagt wird, wobei eine Farbaufnahmefähigkeit und/oder eine Farbanhaftbarkeit der Funktionsschicht (5) **durch** einen in der Funktionsschicht (5) enthaltenen Anteil an Füllstoffen und/oder Additiven eingestellt wird und wobei die Funktionsschicht (5) als Füllstoffe und/oder Additive 0,5 bis 3 Gewichtsprozent Kieselsäure und 0,5 bis 2 Gewichtsprozent Wachs enthält.

7. Verfahren nach Anspruch 6, wobei Schritt b) umfasst: Eine Koronabehandlung des Substrats (2), vorzugsweise mit Niederfrequenz- / Hochfrequenzkorona, Beflammung, Plasmabehandlung, Fluorierung, Silikatisierung, vorzugsweise Flammpyrolyse von Silanen, oder eine Kombination daraus.

8. Verfahren nach Anspruch 6 oder 7, wobei Schritt c) umfasst: Auftragen der Primerung durch Sprühen, Walzauftrag, Gießen bzw Fluten vorzugsweise mit einer Nassfilmdicke von 1 bis 50 g/m².

9. Verfahren nach einem der Ansprüche 6 bis 8, wobei Schritt d) umfasst: Auftragen der Funktionsschicht durch Sprühen, Walzauftragen, Gießen oder Fluten, vorzugsweise mit einer Nassfilmdicke zwischen 1 bis 100 g/m², bevorzugt in Mehrfachbeschichtung.

10. Verfahren nach einem der Ansprüche 6 bis 9, wobei das Verfahren ferner umfasst:
e) Physikalisches Behandeln der Funktionsschicht (5) zur Erhöhung der Oberflächenenergie der Funktionsschicht (5) auf vorzugsweise 47 bis 52 mN/m.

11. Verfahren nach Anspruch 10, wobei Schritt e) umfasst: Koronabehandlung, vorzugsweise mit Niederfrequenz- / Hochfrequenzkorona, Beflammung, Plasmabehandlung, Fluorierung, Silikatisierung, vorzugsweise Flammpyrolyse von Silanen, oder eine Kombination daraus.

## Claims

1. Edge strip for furniture in the form of a decorated profiled plastic piece (1), comprising:
- an extruded profiled substrate (2) as a base body of the profiled plastic piece (1) and
- a functional layer (5), covering at least a portion or portions of the substrate (2),
the functional layer (5) subsequently having a decorative coating (6) applied to it in the form of an inkjet print, an ink absorptivity and/or an ink adherability of the functional layer (5) being set by a proportion of fillers and/or additives contained in the functional layer (5) and the functional layer (5) containing as fillers and/or additives 0.5 to 3 per cent by weight silica and 0.5 to 2 per cent by weight wax.

2. Edge strip according to Claim 1, the decorative coating (6) being adherable to the functional layer (5) and/or absorbable in the functional layer (5).

3. Edge strip according to either of the preceding claims, the profiled plastic piece (1) having a primer (4) between the substrate (2) and the functional layer (5).

4. Edge strip according to Claim 3, the primer being a water-based or radiation-curing primer.

5. Edge strip according to one of the preceding claims, the functional layer having a surface energy of from 40 to 55 mN/m, preferably 47 to 52 mN/m.

6. Method for producing an edge strip for furniture in the form of a profiled plastic piece (1), comprising the steps of:
a) extruding a profiled substrate (2) as a base body of the profiled plastic piece (1), **characterized by**
b) physically treating the substrate (2) to increase the surface energy of the substrate (2);
c) applying a primer (4) to the substrate (2); and
d) applying a functional layer (5) to the substrate (2) to which the primer (4) has been applied, the functional layer (5) subsequently having a decorative coating (6) applied to it by way of inkjet printing, an ink absorptivity and/or an ink adherability of the functional layer (5) being set by a proportion of fillers and/or additives contained in the functional layer (5) and the functional layer (5) containing as fillers and/or additives 0.5 to 3 per cent by weight silica and 0.5 to 2 per cent by weight wax.

7. Method according to Claim 6, step b) comprising: a corona treatment of the substrate (2), preferably with low-frequency/high-frequency corona, flame treatment, plasma treatment, fluorination, silicating, preferably flame pyrolysis of silanes, or a combination thereof.

8. Method according to Claim 6 or 7, step c) comprising: applying the primer by spraying, roller application, pouring or flooding, preferably with a wet film thickness of 1 to 50 g/m2.

9. Method according to one of Claims 6 to 8, step d) comprising: applying the functional layer by spraying, roller application, pouring or flooding, preferably with a wet film thickness of between 1 and 100 g/m2, preferably by multiple coating.

10. Method according to one of Claims 6 to 9, the method further comprising:
e) physically treating the functional layer (5) to increase the surface energy of the functional layer (5) to preferably 47 to 52 mN/m.

11. Method according to Claim 10, step e) comprising: corona treatment, preferably with low-frequency/high-frequency corona, flame treatment, plasma treatment, fluorination, silicating, preferably flame pyrolysis of silanes, or a combination thereof.

## Revendications

1. Listeau pour meubles sous la forme d'un profilé en matière plastique décoré (1), comprenant:
- un substrat profilé (2) extrudé prenant la forme d'un corps de base du profilé en matière plastique (1) ; et
- une couche fonctionnelle (5) recouvrant le substrat (2) au moins sur certains segments ; la couche fonctionnelle (5) étant ensuite revêtue d'un revêtement décoratif (6) réalisé sous la forme d'une impression jet d'encre, une capacité de logement de la couleur et/ou une capacité de tenue de la couleur de la couche fonctionnelle (5) étant mise au point par le biais d'une certaine teneur en matières de remplissage et/ou en additifs contenue dans la couche fonctionnelle (5) et la couche fonctionnelle (5) contenant, comme matières de remplissage et/ou additifs, 0,5 à 3 pour cent en poids d'acide silicique et 0,5 à 2 pour cent en poids de cire.

2. Listeau selon la revendication 1, le revêtement décoratif (6) pouvant être collé à la couche fonctionnelle (5) et/ou être logé dans la couche fonctionnelle (5).

3. Listeau selon l'une quelconque des revendications précédentes, le profilé en matière plastique (1) comportant une première d'accrochage (4) entre le substrat (2) et la couche fonctionnelle (5).

4. Listeau selon la revendication 3, la première d'accrochage étant une première d'accrochage à base d'eau ou durcissant sous les UV.

5. Listeau selon l'une quelconque des revendications précédentes, la couche fonctionnelle présentant une tension en surface de 40 à 55 mN/m, de préférence de 47 à 52 mN/m.

6. Procédé de réalisation d'un listeau pour meubles sous la forme d'un profilé en matière plastique (1), comprenant les étapes suivantes :
a) l'extrusion d'un substrat profilé (2) prenant la forme d'un corps de base du profilé en matière plastique (1), **caractérisé par** :
b) le traitement physique du substrat (2) pour accroître la tension en surface du substrat (2) ;
c) le revêtement du substrat (2) avec une première d'accrochage (4) ; et
d) l'application d'une couche fonctionnelle (5) sur le substrat (2) revêtu de la première d'accrochage (4), la couche fonctionnelle (5) étant ensuite revêtue d'un revêtement décoratif (6) au moyen d'une impression jet d'encre, une capacité de logement de la couleur et/ou une capacité de tenue de la couleur de la couche fonctionnelle (5) étant mise au point grâce à une teneur en matières de remplissage et/ou en additifs contenue dans la couche fonctionnelle (5) et la couche fonctionnelle (5) contenant, comme matières de remplissage et/ou additifs, 0,5 à 3 pour cent en poids d'acide silicique et 0,5 à 2 pour cent en poids de cire.

7. Procédé selon la revendication 6, l'étape b) comprenant : un traitement par effet Corona du substrat (2), de préférence avec effet Corona basse fréquence / haute fréquence, application d'une flamme, traitement par effet Plasma, fluoration, silicatisation, de préférence pyrolyse par flamme de silanes ou une combinaison de ceux-ci.

8. Procédé selon la revendication 6 ou 7, l'étape c) comprenant : l'application de la première d'accrochage par vaporisation, application au rouleau, versage et/ou noyage, de préférence avec une épaisseur de film mouillé allant de 1 à 50 g/m2.

9. Procédé selon l'une quelconque des revendications 6 à 8, l'étape d) comprenant :
l'application de la couche fonctionnelle par pulvérisation, application au rouleau, versage ou noyage, de préférence avec une épaisseur de film mouillé comprise entre 1 à 100 g/m2, de préférence en plusieurs couches.

10. Procédé selon l'une quelconque des revendications 6 à 9, le procédé comprenant en outre : e) le traitement chimique de la couche fonctionnelle (5) pour accroître la tension en surface de la couche fonctionnelle (5) de 47 à 52 mN/m de préférence.

11. Procédé selon la revendication 10, l'étape e) comprenant : le traitement par effet Corona, de préférence avec effet Corona basse fréquence / haute fréquence, application d'une flamme, traitement par effet Plasma, fluoration, silicatisation, de préférence pyrolyse par flamme de silanes ou une combinaison de ceux-ci.
